# EUROPEAN PATENT APPLICATION

(11) **EP 4 844 568 A1**
(43) Date of publication of application: **25.11.2026**
(21) Application number: 26179697.3
(22) Date of filing: 19.05.2026
(51) Int. Cl.: G06F 3/16, G10L 15/22

(54) **INTERACTION METHOD, WEARABLE ELECTRONIC DEVICE, AND INTERACTION SYSTEM**

(30) Priority: 22.05.2025 US 202563810730 P; 13.03.2026 US 202619565570
(71) Applicant: HTC Corporation, Taoyuan City 330 (TW)
(72) Inventor: YU, Han-Kuan, 330 Taoyuan City (TW); LING, Chiming, 330 Taoyuan City (TW); TSENG, Shih-Che, 330 Taoyuan City (TW)
(74) Representative: Wagner & Geyer

(57) **Abstract**

An interaction method between a wearable electronic device and a computing device is provided. A voice command is received by the wearable electronic device. First data corresponding to at least one of the voice command and an input intent of the voice command is transmitted from the wearable electronic device to the computing device. Based on the first data, a target third-party application is selected from a plurality of third-party applications on the computing device, and the first data is provided to the target third-party application. When the target third-party application determines that additional information is required to complete a task, a follow-up query is generated. Second data corresponding to the follow-up query is transmitted from the computing device to the wearable electronic device and is presented to a user by the wearable electronic device.

## Description

### RELATED APPLICATIONS

This application claims the priority benefit of U.S. Provisional Application Serial Number 63/810,730, filed May 22, 2025, which is herein incorporated by reference.

### BACKGROUND

### Field of Invention

The present disclosure relates to an interaction method, and more particularly, to an interaction method between a wearable electronic device and a computing device, and the wearable electronic device and interaction system thereof.

### Description of Related Art

Wearable electronic devices, such as smart glasses and augmented reality (AR) headsets, are becoming increasingly prevalent. These devices offer users a hands-free way to interact with digital information and the physical world. Voice commands have emerged as a primary input method for these devices, allowing users to request information or perform actions without manual input.

However, a significant challenge remains in the interaction between these wearable devices and the powerful third-party applications residing on a user's smartphone. Currently, the interaction is often limited or cumbersome. For complex tasks such as ordering food, calculating the calories of a meal, or booking a ride, users typically must take out their mobile device, unlock it, manually find and launch the specific application, and then interact with its graphical user interface. This process defeats the purpose of a hands-free experience that wearable devices are meant to provide.

### SUMMARY

The disclosure provides an interaction method suitable between a wearable electronic device and a mobile device. The interaction method comprises receiving a voice command by the wearable electronic device. First data corresponding to at least one of the voice command and an input intent of the voice command is transmitted from the wearable electronic device to the mobile device. A target third-party application is selected from a plurality of third-party applications on the mobile device based on the first data, and the first data is provided to the target third-party application. In response to the target third-party application determining that additional information is required to complete a task, a follow-up query is generated by the target third-party application. Second data about the follow-up query is transmitted from the mobile device to the wearable electronic device, and the second data is presented by the wearable electronic device.

The disclosure also provides a wearable electronic device. The device comprises a microphone, a wireless transceiver, a memory, and a processor. The wireless transceiver is configured for communicatively connecting to a mobile device. The memory is configured for storing a middleware artificial intelligence (AI) model and a plurality of instructions. The processor is coupled with the microphone, the wireless transceiver, and the memory. The processor is configured to execute the instructions to receive a voice command via the microphone, analyze the voice command by the middleware Al model to determine an input intent, and transmit first data corresponding to the voice command and the input intent to the mobile device. The processor is further configured to receive second data about a follow-up query from the mobile device, wherein the follow-up query is generated by a target third-party application on the mobile device, and present the second data.

The disclosure further provides an interaction system. The system comprises a wearable electronic device and a mobile device. The wearable electronic device is configured to receive a voice command, and transmit first data corresponding to at least one of the voice command and an input intent of the voice command. The mobile device is communicatively coupled to the wearable electronic device and is configured to receive the first data, select a target third-party application from a plurality of third-party applications based on the first data, provide the first data to the target third-party application, receive a follow-up query from the target third-party application, and transmit second data about the follow-up query back to the wearable electronic device. The wearable electronic device is further configured to receive and present the second data.

It is to be understood that both the foregoing general description and the following detailed description are by examples, and are intended to provide further explanation of the invention as claimed.

### BRIEF DESCRIPTION OF THE DRAWINGS

The disclosure can be more fully understood by reading the following detailed description of the embodiment, with reference made to the accompanying drawings as follows:
FIG. 1 is a schematic diagram illustrating an interaction system in a usage scenario according to some embodiments of the disclosure.
FIG. 2 is a functional block diagram of the interaction system of FIG. 1 according to some embodiments of the disclosure.
FIG. 3 is a flowchart illustrating an interaction method according to an embodiment of the disclosure.
FIG. 4 is a functional block diagram illustrating an interaction system according to another embodiment of the disclosure.
FIG. 5 is a flowchart illustrating an interaction method according to another embodiment of the disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

Wearable electronic devices, such as smart glasses and smartwatches, are designed to seamlessly integrate into a user's daily life by providing convenient, contextual information with minimal physical intrusion. Due to their compact form factor, these wearable electronic devices inherently lack traditional input peripherals like keyboards or large touchscreens. This physical constraint makes complex manual data entry or navigation through intricate menus impractical and often counter-intuitive, especially when the user is mobile or has their hands occupied. Consequently, voice interaction has become the most natural and efficient method for controlling these devices and accessing their features. An Artificial Intelligence (AI) assistant serves as the crucial conversational interface that translates a user's spoken natural language commands into actionable tasks to the wearable electronic devices.

Existing voice assistants on wearable devices often lack deep integration with third-party applications. The communication is frequently one-way, where the assistant can push simple notifications to an application, but cannot engage in a continuous, two-way dialogue. For instance, a user cannot simply say "order my usual pizza" to their smart glasses and have the device intelligently launch the correct food delivery app and handle follow-up questions from the app, such as "Which payment method would you like to use?". This fragmentation in user experience causes a disconnection between the user's intent and the capabilities of the applications on their mobile device.

Therefore, there is a need for an improved interaction method and system that can seamlessly and intelligently bridge the gap between a user's voice commands on a wearable electronic device and the functionalities of third-party applications on a mobile device, enabling a truly hands-free and interactive experience.

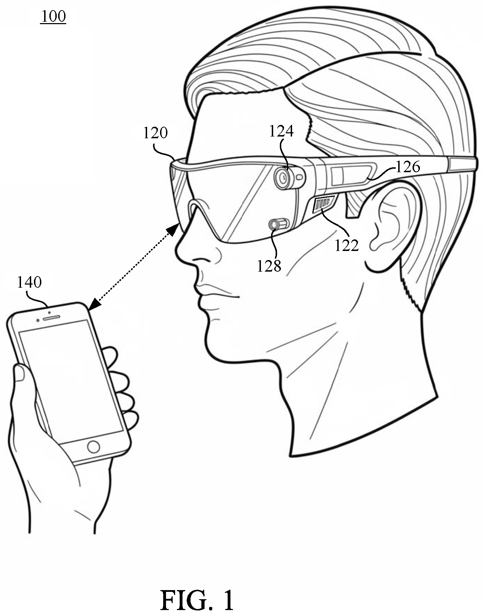

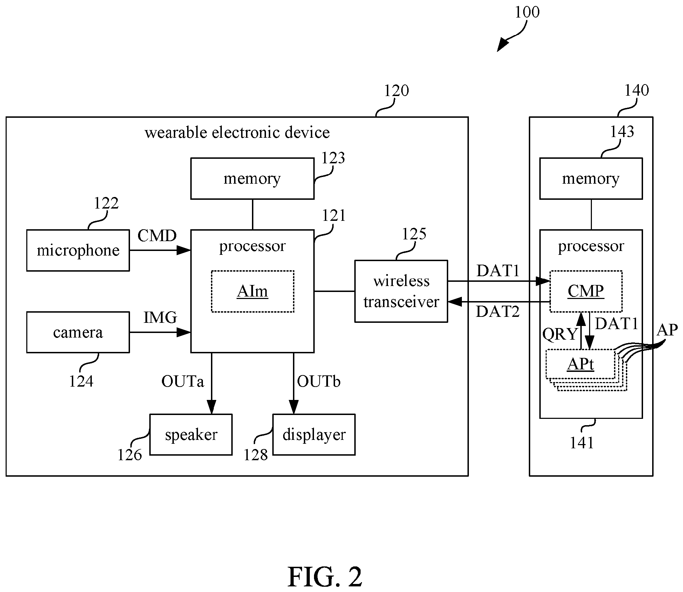

Reference is made to FIG. 1 and FIG. 2. FIG. 1 is a schematic diagram illustrating an interaction system 100 according to some embodiments of this disclosure. FIG. 2 is a functional block diagram of the interaction system 100 shown in FIG. 1. The interaction system 100 includes a wearable electronic device 120 and a computing device 140. In some embodiments, the wearable electronic device 120 may be a pair of smart glasses as shown, or another device such as an augmented reality (AR), virtual reality (VR) headset, a smart watch or wireless earphones (e.g., Bluetooth earbuds/headphones). In some embodiments, the wireless earphones may or may not be equipped with a camera. The computing device 140 may be a smartphone, a tablet, a personal computer (PC), a notebook computer, a smart speaker (e.g., a voice-controlled speaker device), or another similar computing device. In some embodiments, the computing device 140 can be a portable electronic device (e.g., the smartphone). It is noted that the computing device 140 is not limited to the portable electronic device.. The wearable electronic device 120 and the computing device 140 are communicatively coupled, for example, via a short-range wireless protocol such as Bluetooth or Wi-Fi.

As shown in FIG. 2, the wearable electronic device 120 includes a processor 121, a microphone 122, a memory 123, a camera 124, a wireless transceiver 125, a speaker 126, and a displayer 128. The processor 121 is the central control unit of the device 120. The microphone 122 is configured to capture audio signals from the user, such as a voice command CMD. The camera 124 is configured to capture image data IMG from the user's field of view. The wireless transceiver 125 is configured to establish a communicative connection to the computing device 140. The speaker 126 provides audio output OUTa to the user, and the displayer 128 provides visual output OUTb. The memory 123 is coupled to the processor 121 and stores instructions and data, including a middleware artificial intelligence (AI) model Alm.

The computing device 140 includes a processor 141 and a memory 143. The memory 143 is configured to store a plurality of third-party applications AP and a companion application CMP. The companion application CMP acts as a bridge or an intermediary between the wearable electronic device 120 and the third-party applications AP. Each of the third-party applications AP is a software program that can perform specific tasks, such as food ordering, navigation, or calorie counting. In some embodiments, each of the third-party applications AP is integrated with a software development kit (SDK) that enables it to communicate with the companion application CMP.

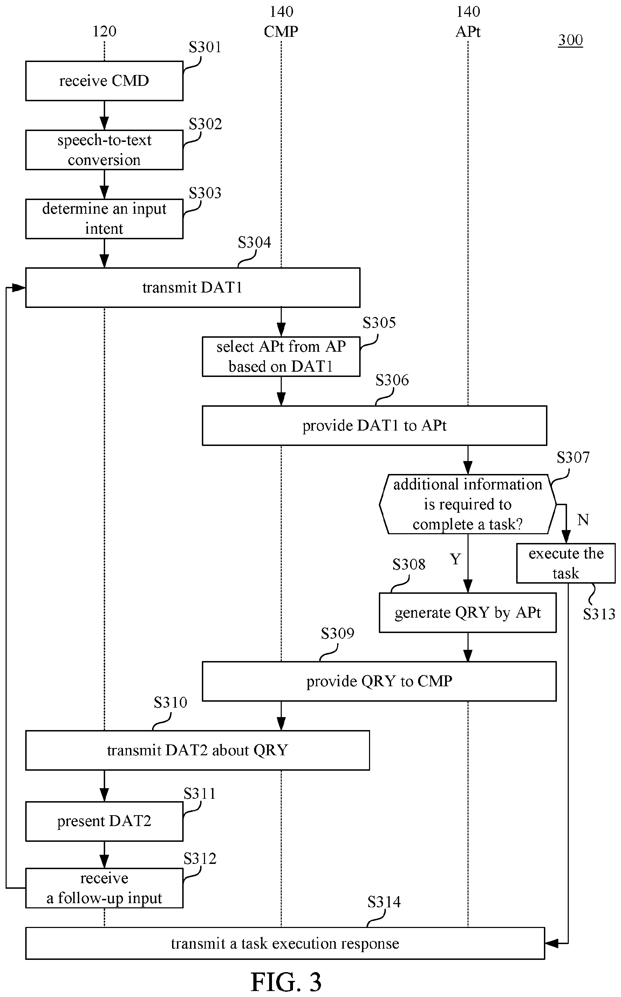

Reference is further made to FIG. 3, which is a flowchart illustrating an interaction method 300 according to an embodiment of the disclosure. The method 300 describes the seamless interaction between the wearable electronic device 120 and the computing device 140. In some embodiments, the interaction method 300 is primarily performed by the processor 121 of the wearable electronic device 120 and the processor 141 of the computing device 140, executing instructions stored in their respective memories 123 and 143. For clarity, the flowchart is divided into three columns representing the operations performed by the wearable electronic device 120, the companion application CMP on the computing device 140, and a target third-party application APt on the computing device 140.

At step S301, the interaction method 300 begins with the wearable electronic device 120 receiving a voice command CMD from the user via the microphone 122. For example, the user might say, "I want to order a pizza", "How many calories are in this apple?" while looking at an apple, or "What is this song?" while listening to a music track.

Afterward, steps S302 and S303 are executed to analyze the voice command CMD to determine an input intent of the voice command CMD, prior to transmitting the first data DAT1 in step S304.

In some embodiments, at step S302, the processor 121 may optionally perform a speech-to-text conversion on the received voice command CMD to transform the spoken words into a machine-readable text format.

At step S303, the processor 121 analyzes the voice command CMD to determine the input intent. This analysis is performed by the processor 121 executing the middleware Al model Alm stored in the memory 123. In some embodiments, the middleware Al model Alm is distinct from general-purpose generative models in terms of scale and function. The middleware Al model AIm is configured as a lightweight or small-scale model, such as a Small Language Model (SLM), specifically optimized for on-device execution with low latency. Unlike large language models (LLMs) that rely on vast parameters for broad content generation, the middleware Al model Alm is specific-function oriented. It is primarily trained for semantic analysis and intent classification using neural network-based semantic understanding. This allows the wearable electronic device 120 to perform deep reasoning on the user's input and intelligently route commands without the high computational overhead or latency associated with accessing a full-scale cloud-based model. Based on this analysis, the middleware Al model AIm is configured to perform natural language understanding to classify the user's intention. For instance, it may map the voice command to one of predefined application categories. In some embodiments, these predefined application categories could include a photo-based searching category (e.g., for the calorie counting), a voice-based searching category (e.g., for the music searching), or a text-based ordering category (e.g., for the pizza ordering).

In some embodiments, if the input intent requires visual information (e.g., "calculate calories of this apple"), the processor 121 may, in response to the voice command, trigger the camera 124 to capture an image data IMG or a video stream. For example, the processor 121 operates in coordination with the middleware Al model Alm, which functions as an on-device Al agent capable of hardware orchestration. If the input intent analyzed by the middleware Al model AIm requires visual information (e.g., "calculate calories of this apple"), the middleware Al model Alm generates a specific control signal or a hardware activation request. The processor 121, in response to this request from the Al agent mechanism, triggers the camera 124 to capture image data IMG or a video stream. In this manner, the camera 124 is intelligently and automatically activated based on the semantic understanding of the conversation, rather than requiring a manual mode switch by the user.

At step S304, the wearable electronic device 120 transmits first data DAT1 to the computing device 140 via the wireless transceiver 125. The first data DAT1 corresponds to at least one of the voice command CMD and the input intent determined from the voice command CMD. In some embodiments, the first data DAT1 may further include visual information (e.g., image data IMG or a video stream) captured by the wearable electronic device 120. In this embodiment illustrated in FIG. 2 and FIG. 3, both of the voice command CMD and the input intent are generated/determined on the wearable electronic device 120 and transmitted to the computing device 140 in the first data DAT1. The disclosure is not limited thereto. In some other embodiments, the input intent can be determined later by the computing device (not illustrated in FIG. 2 and FIG. 3), and will be discussed later in other embodiments.

The composition of the first data DAT1 is dynamic and specifically tailored to the received voice command and its determined input intent, ensuring that the computing device 140 receives all necessary information to select and interact with the correct target third-party application APt. The first data DAT1 can be transmitted in a structured format, such as a JSON (JavaScript Object Notation) object, and may be accompanied by streaming raw data for multimedia content.

For instance, in the case where the voice command is "I want to order a pizza," the middleware Al model Alm determines the input intent as "text-based ordering." Accordingly, the first data DAT1 would primarily contain text-based information, such as a JSON object specifying the input intent and the text of the voice command CMD. For example, a possible JSON structure for the first data DAT1 could be: { "input_intent": "text-based-ordering", "command_text": "I want to order a pizza", "multimedia_data": null }

In a different scenario, where the user asks "How many calories are in this apple?", the middleware Al model AIm identifies the intent as "photo-based searching." This would have caused the processor 121 to capture an image IMG of the apple via the camera 124. Consequently, the first data DAT1 must include both the textual intent and the visual data. The first data DAT1 could be transmitted as a multipart message where one part is a JSON object and the other is the image data IMG, or the image data IMG could be sent as streaming raw data.

Similarly, if the voice command is "What is this song?", the determined input intent would be "audio-identification." This requires the microphone 122 to capture a sample of the ambient audio. The first data DAT1 can include information identifying this input intent along with the captured audio clip, which could also be transmitted as a raw data stream. As demonstrated by these examples, the first data DAT1 serves as a comprehensive information package that precisely conveys the user's request and any necessary contextual data from the wearable electronic device 120 to the computing device 140.

Upon receiving the first data DAT1 at the computing device 140, the companion application CMP proceeds to step S305, where it functions as an intelligent dispatcher. The companion application CMP is configured to select an appropriate target third-party application APt from the third-party applications AP installed on the computing device 140. This selection process is not arbitrary. This selection in step S305 can refer a registration mechanism enabled by the software development kit (SDK).

For third-party applications AP to participate in this interactive ecosystem, developers of the third-party applications AP must integrate the provided software development kit. A key function of this software development kit is to provide an interface for the third-party applications AP to programmatically register its specific capabilities with the companion application CMP. This registration involves the third-party application declaring which of the predefined application categories it is designed to handle. For example, a food delivery application would use an SDK function to register itself for the "text-based-ordering" category, while an image recognition app would register for the "photo-based-searching" category.

The companion application CMP maintains a registry or a mapping table of these declarations. This registry effectively links specific input intents to the corresponding third-party applications that have claimed capability for them. Therefore, in step S305, when the companion application CMP receives the first data DAT1, it extracts the input intent and consults this registry. By matching the received input intent with the registered categories, it can accurately and automatically identify and select the target third-party application APt. For instance, if the input intent is "text-based-ordering," the companion application CMP will select the registered food delivery app as the APt for the current task.

At step S306, the companion application CMP, acting as a bridge, provides the first data DAT1 to the target third-party application APt. The software development kit integrated into the target third-party application APt enables it to receive the first data DAT1.

In some embodiments, the software development kit is configured to provide a set of functions and rules for third-party developers. A primary function of the software development kit is to provide the software interface for the registration process, which allows an application to declare its capabilities. Additionally, the software development kit defines a clear and reliable application programming interface (API) that creates a standard way for the third-party applications AP to communicate with the computing device 140 (or the companion application CMP). This application programming interface includes functions for the target third-party application APt to receive, parse and interpret the incoming first data DAT1, as well as functions to create and send a follow-up query QRY or a final task execution response.

In some embodiments, the software development kit (SDK) may provide data parsing utilities that allow the target third-party application APt to map data fields within the standardized first data DAT1 (e.g., specific intent tags or slot values in a JSON object) to internal variables utilized in the target third-party application APt. In scenarios requiring deeper semantic analysis, the SDK may further include interfaces for establishing a collaborative operation with an Al module (embedded within the application or provided by the SDK) to decipher complex natural language constraints within the voice command. Furthermore, the API provides constructors or response templates for generating and sending a follow-up query QRY or a final task execution response, enabling the target third-party application APt to generate texts for audio playback (and/or visual elements for display) into a format compatible with the wearable electronic device 120.

At step S307, the target third-party application APt processes the received data and initiates its internal logic to fulfill the user's task. The necessity for additional information at this stage often depends on the specificity of the initial voice command and any pre-configured user settings within the application. For instance, if the user's command was highly specific, such as "Order my usual large pepperoni pizza," and the user's address and payment details are already saved as defaults, the target third-party application APt might determine that no further information is needed. In such a streamlined scenario, the interaction method 300 proceeds to step S313. The target third-party application APt executes the task by placing the order. It then transmits a task execution response in step S314 back to the wearable device 120 via the companion application CMP, providing a confirmation to the user, such as, "Your usual large pepperoni pizza has been ordered."

On the other hand, in the more common scenario where the voice command is general, such as "I want to order a pizza," the target third-party application APt cannot complete the task with only the initial data. Upon launching its pizza ordering workflow, the target third-party application APt would immediately identify that critical details are missing. For example, it still needs to know the desired pizza flavor, the size, the delivery address, and the payment information. In conventional systems, this is precisely the point where the hands-free experience would break down. The user would be forced to retrieve their computing device (e.g., a smartphone), unlock it, and manually interact with the graphical user interface of the target third-party application on the computing device to view these options and input the required details.

In some embodiments of this disclosure, instead of waiting for inputs on the computing device 140, when the target third-party application APt determines that additional information is required, the target third-party application APt can activate an interactive framework provided by the software development kit. Rather than waiting for manual input on the computing device 140, in step S308, the target third-party application APt proceeds to generate a follow-up query QRY to ask for the missing information.

The mechanism for generating the follow-up query QRY may be implemented in various ways. In some embodiments with a rule-based implementation, the target third-party application APt identifies a set of required parameters (e.g., empty data fields necessary to complete an order) and retrieves pre-defined prompt texts associated with these missing parameters according to a pre-designed interaction flow sequence. In some other embodiments with an Al-driven implementation, the target third-party application APt may incorporate or interface with a generative Al module. This allows the application to naturally formulate the follow-up query QRY by analyzing the context of the missing information and the user's previous inputs.

At step S308, the target third-party application APt generates the follow-up query QRY, such as "What toppings would you like?" or "Please confirm your delivery address."

At step S309, the target third-party application APt provides the follow-up query QRY to the companion application CMP through the software development kit.

At step S310, the companion application CMP transmits second data DAT2 about the follow-up query QRY back to the wearable electronic device 120.

At step S311, upon receiving the second data DAT2 from the computing device 140, the wearable electronic device 120 presents it to the user. This presentation is context-aware and can be delivered through multiple manners. Continuing the pizza ordering example, if the follow-up query QRY from the target third-party application APt was "What kind of pizza would you like?", the processor 121 may perform a text-to-speech (TTS) conversion on the second data DAT2. This would generate an audio output OUTa broadcasted through the speaker 126, causing the user to hear the audible question, "What kind of pizza would you like?". Concurrently or alternatively, the processor 121 may generate a prompt output OUTb on the displayer 128. This visual prompt could be an augmented reality overlay in the user's field of view, displaying the text of the question and/or a list of popular options received in the second data DAT2, such as "Pepperoni," "Margherita," and "Hawaiian," which the user can see and choose from.

At step S312, the user provides a follow-up input in response to the prompt presented in the previous step. For instance, after hearing the audio question and/or seeing the options, the user might simply speak their choice, such as "Pepperoni." This spoken response is captured by the microphone 122 of the wearable electronic device 120. The interaction method 300 may return back to step S304. The captured follow-up input ("Pepperoni") is packaged into new or updated first data DAT1 and transmitted back to the computing device 140 for the target third-party application APt. This process facilitates a continuous, two-way dialogue. The target third-party application APt (e.g., food delivery application) running on the computing device 140 can acknowledge the flavor inputted by the user through the wearable electronic device 120, might then generate a second follow-up query for the desired size, which would trigger the entire loop again. This interactive cycle repeats until all necessary information is gathered and the task is completed at step S313. During the whole procedure, the user is not required to physically/directly interact with the computing device 140.

This interaction method 300 is able to repeatedly generate follow-up queries and gather follow-up inputs. It effectively establishes a robust, continuous two-way dialogue between the user and the third-party application APt, with the wearable electronic device 120 acting as the user interface. Crucially, this iterative process allows the user to navigate complex, multi-step tasks (such as customizing a food order with various options, confirming a delivery address, and selecting a payment method) entirely through voice and visual prompts on the wearable electronic device 120 without directly manipulating on the computing device 140. The user is thereby completely absolved of the need to retrieve, unlock, or physically manipulate their computing device (e.g., a smartphone) to complete the transaction.

The utility of this two-way dialogue extends beyond transactional tasks. For instance, if a user inputs a voice command CMD about the visually-based query such as, "Tell me about that building," the interactive capability is crucial for resolving ambiguity. If the initial image data captured by the camera 124 is not geographically unique, the target third-party application APt might generate a follow-up query to ask the user with a question like, "To help me identify the structure, can you confirm which city you are in?". Alternatively, if the user's field of view contains multiple possible buildings, the follow-up query could serve to disambiguate the user's focus. The target third-party application APt might analyze the image data IMG and ask, "Are you referring to the grey spire in front of you, or the red arch to your right?". This ability to handle ambiguous, real-world inquiries further demonstrates the robustness of the interaction system 100.

Consequently, the present invention empowers the wearable electronic device 120 to function far beyond the scope of its native, on-device applications. It effectively transforms the wearable electronic device 120 into a sophisticated remote interface, capable of orchestrating complex functionalities within powerful third-party applications that reside on the computing device 140. This extends the utility of the wearable electronic device 120.

In the described embodiments, the middleware Al model Alm is located on the wearable electronic device 120. However, the disclosure is not limited thereto. In alternative embodiments, some or all of the input intent analysis could be performed by the companion application CMP on the computing device 140 after receiving the raw voice command data from the wearable electronic device. Such a configuration may be advantageous if the computing device 140 possesses significantly more processing power. The core principle of enabling a two-way dialogue between the user (via the wearable electronic device 120) and the third-party application APt remains the same regardless of where the initial intent analysis is performed.

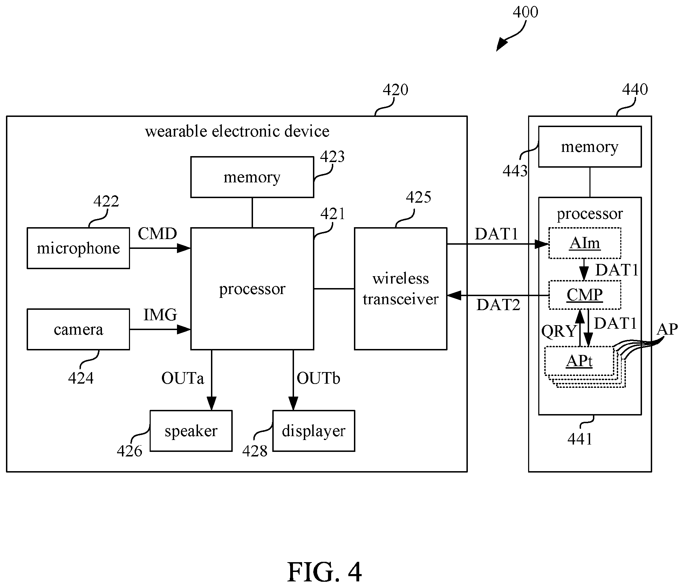

Reference is made to FIG. 4, which is a functional block diagram illustrating an interaction system 400 according to another embodiment of the disclosure. The interaction system 400 is substantially similar to the interaction system 100 shown in FIG. 2, comprising a wearable electronic device 420 and a computing device 440. However, a primary distinction lies in the deployment location of the intelligence. In the present embodiment, the wearable electronic device 420 is designed as a lightweight client, while the heavy-lifting regarding intent analysis is offloaded to the computing device 440.

As shown in FIG. 4, the wearable electronic device 420 includes a processor 421, a microphone 422, a memory 423, a camera 424, and a wireless transceiver 425. Unlike the embodiment in FIG. 2, the memory 423 of the wearable electronic device 420 might not store the middleware Al model. Instead, the middleware Al model Alm is stored in the memory 443 of the computing device 440 and is executed by the processor 441 of the computing device 440.

In this configuration, when the microphone 422 receives a voice command CMD (or the camera 424 captures image data IMG), the processor 421 does not perform local intent classification. Instead, the processor 421 packages the received voice command CMD (and/or the image data IMG) into the first data DAT1 and transmits it to the computing device 440 via the wireless transceiver 425. Consequently, in this embodiment, the first data DAT1 transmitted over the air includes the raw or pre-processed user input (e.g., audio/image) without the determined input intent. In some embodiments, the first data DAT1 may further include visual information (e.g., image data IMG or a video stream) captured by the wearable electronic device 120.

Upon receiving the first data DAT1, the processor 441 of the computing device 440 executes the middleware Al model Alm to analyze the voice command CMD (and/or image data IMG) contained therein. The middleware Al model Alm running on the computing device 440 performs the natural language understanding to determine the input intent. Once the input intent is derived by the computing device 440, the input intent can be attached to the first data DAT1. The first data DAT1 (with the input intent derived by the middleware Al model Alm) is then passed to the companion application CMP (or used directly by the companion application CMP) to select the appropriate target third-party application APt and facilitate the subsequent providing of data and handling of follow-up queries QRY. This architecture allows the interaction system 400 to leverage the potentially superior processing power and battery capacity of the computing device 440 (e.g., a PC or a high-end smartphone), thereby reducing the power consumption and thermal footprint of the wearable electronic device 420.

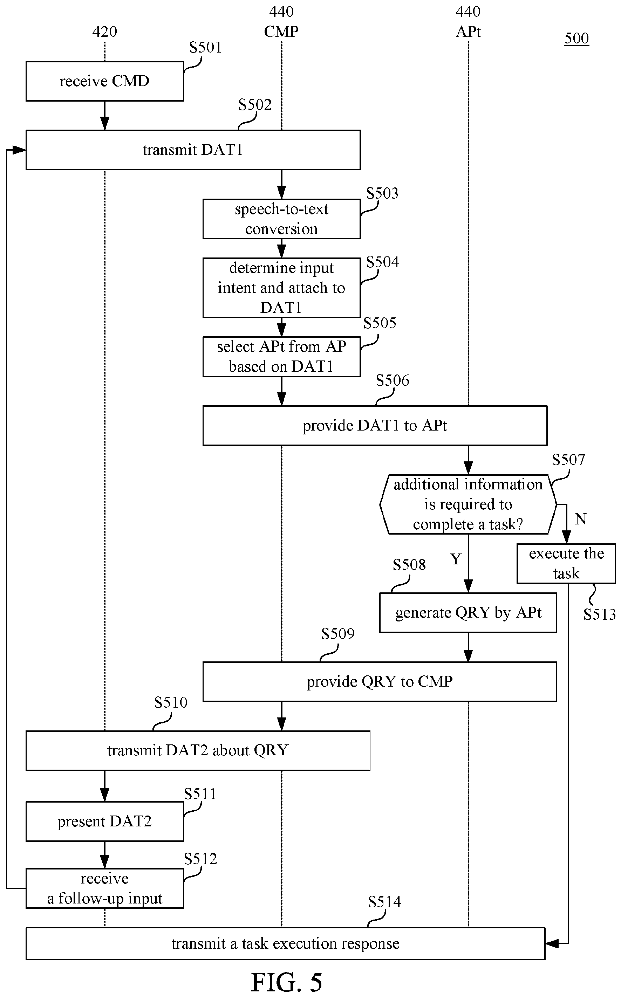

Reference is further made to FIG. 5, which is a flowchart illustrating an interaction method 500 according to the alternative embodiment shown in FIG. 4. The interaction method 500 is specifically adapted for configurations where the middleware Al model Alm resides on the computing device 440.

At step S501, the interaction method 500 begins with the wearable electronic device 420 receiving the voice command CMD. At step S502, distinct from the method 300 in FIG. 3, the wearable electronic device 420 transmits the first data DAT1 to the computing device 440 prior to determining the input intent. In this step, the first data DAT1 includes the voice command CMD (e.g., as an audio stream or raw audio file) and/or the visual information, but does not yet contain the resolved input intent tags.

Upon receiving the first data DAT1, the computing device 440 takes over the processing tasks. At step S503, the processor 441 of the computing device 440 may perform a speech-to-text conversion on the audio data within the first data DAT1. Subsequently, at step S504, the processor 441 utilizes the middleware Al model Alm stored in the memory 443 to analyze the voice command (or the converted text). This step effectively shifts the computational burden of intent classification from the wearable electronic device 420 to the computing device 440. Once the input intent is determined, it is attached to or associated with the first data DAT1 (or the first data DAT1 is updated to include said intent) to facilitate the subsequent routing.

Proceeding to step S505, the companion application CMP on the computing device 440 utilizes the input intent derived in step S504 to select the target third-party application APt from the third-party applications AP. The subsequent operations, specifically steps S506 through S514, proceed in a manner substantially similar to steps S306 through S314 described in FIG. 3. The first data DAT1 (now including the input intent derived on the computing device 440) is provided to the target third-party application APt, and if additional information is required, the target third-party application APt generates a follow-up query QRY (Step S508). The second data DAT2 regarding this query is transmitted back to the wearable electronic device 420 (Step S510) for presentation (Step S511), thereby maintaining the continuous two-way dialogue regardless of where the initial intent analysis occurred.

In conclusion, the disclosed method and system create a cohesive and intelligent ecosystem. By embedding intent analysis capabilities on the wearable electronic device or the computing device and using a companion application on the computing device to intelligently dispatch tasks and manage dialogue, the invention allows users to interact with complex third-party applications in a truly seamless and hands-free manner.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. An interaction method, suitable between a wearable electronic device and a computing device, the interaction method comprising:
receiving a voice command by the wearable electronic device;
transmitting first data corresponding to at least one of the voice command and an input intent of the voice command, from the wearable electronic device to the computing device;
selecting a target third-party application from a plurality of third-party applications on the computing device based on the first data;
providing the first data to the target third-party application;
in response to the target third-party application determining that additional information is required to complete a task corresponding to the voice command, generating a follow-up query by the target third-party application;
transmitting second data about the follow-up query from the computing device to the wearable electronic device; and
presenting the second data by the wearable electronic device.

2. The interaction method of claim 1, wherein the input intent is determined by an artificial intelligence model executed on the wearable electronic device prior to transmitting the first data, the first data comprises the voice command and the input intent, and the artificial intelligence model is configured to determine the input intent by mapping the voice command to one of a plurality of predefined application categories.

3. The interaction method of claim 2, wherein the predefined application categories comprises a photo-based searching category, a voice-based searching category or a text-based ordering category.

4. The interaction method of claim 2, wherein each of the third-party applications is registered to at least one of the predefined application categories, and wherein selecting the target third-party application is based on a match between the input intent and registrations of the third-party applications.

5. The interaction method of claim 1, wherein the first data comprises the voice command, and the input intent is determined by a middleware Al model executed on the computing device after receiving the first data.

6. The interaction method of claim 1, further comprising:
in response to the voice command, capturing an image or a video stream by a camera of the wearable electronic device, wherein the first data transmitted to the computing device comprises the image or the video stream.

7. The interaction method of claim 1, wherein presenting the second data by the wearable electronic device comprises performing a text-to-speech (TTS) conversion on the second data and playing an audio output generated from the text-to-speech conversion.

8. The interaction method of claim 1, wherein presenting the second data by the wearable electronic device comprises displaying a prompt output generated based on the second data.

9. The interaction method of claim 1, wherein the computing device is configured to run a companion application to act as a bridge between the wearable electronic device and the target third-party application.

10. The interaction method of claim 9, wherein each of the third-party applications is integrated with a software development kit (SDK), the software development kit is configured to enable the third-party application to receive the first data from the companion application and to transmit the follow-up query back to the companion application.

11. A wearable electronic device, comprising:
a microphone;
a wireless transceiver, configured for communicatively connecting to a computing device;
a memory, configured for storing a middleware Al model and a plurality of instructions;
a processor, coupled with the microphone, the wireless transceiver and the memory, wherein the processor is configured to execute the instructions to:
receive, via the microphone, a voice command;
analyze the voice command by the middleware Al model to determine an input intent of the voice command;
transmit, via the wireless transceiver, first data corresponding to the voice command and the input intent to the computing device, wherein the first data is for selecting a target third-party application on the computing device;
receive, via the wireless transceiver, second data about a follow-up query from the computing device, wherein the follow-up query is generated by the target third-party application; and
present the second data.

12. The wearable electronic device of claim 11, further comprising a camera,
in response to the voice command, the processor is configured to trigger the camera to capture an image or a video stream, wherein the first data comprises the image or the video stream.

13. The wearable electronic device of claim 11, wherein the middleware Al model is configured to map the voice command to one of a plurality of predefined application categories to determine the input intent.

14. The wearable electronic device of claim 11, wherein the wearable electronic device is smart glasses.

15. An interaction system, comprising:
a wearable electronic device, configured to:
receive a voice command; and
transmit first data corresponding to at least one of the voice command and an input intent of the voice command;
a computing device, communicatively coupled to the wearable electronic device, the computing device configured to:
receive the first data from the wearable electronic device;
select a target third-party application from a plurality of third-party applications based on the first data;
provide the first data to the target third-party application;
receive a follow-up query from the target third-party application; and
transmit second data about the follow-up query to the wearable electronic device,
wherein the wearable electronic device is further configured to receive and present the second data.
